# EUROPÄISCHE PATENTSCHRIFT

(11) **EP 0 358 980 B1**
(45) Veröffentlichungstag und Bekanntmachung des Hinweises auf die Patenterteilung: **21.04.1993**
(21) Anmeldenummer: 89115371.0
(22) Anmeldetag: 21.08.1989
(51) Int. Cl.: C04B 35/00, H01L 39/24

(54) **Keramischer Hochtemperatur-Supraleiter in Bulk-Form sowie Verfahren zu dessen Herstellung**
Bulk shape high-temperature superconductor, and method for its manufacture
Supraconducteur céramique a haute température, en bloc, et son procédé de fabrication

(30) Priorität: 13.09.1988 CH 3415/88
(43) Veröffentlichungstag der Anmeldung: 21.03.1990
(73) Patentinhaber: ASEA BROWN BOVERI AG, 5400 Baden (CH)
(72) Erfinder: Kaldis, Emanuel, Prof. Dr., CH-8910 Affoltern (CH); Karpinski, Janusz, Dr., CH-8964 Rudolfstetten (CH)

(56) Entgegenhaltungen:
- NATURE, Band 334, Nr. 6178, 14. Juli 1988, Seiten 141-143; P. MARSH et al.: "Crystal structure of the 80 K superconductor YBa2Cu4O8"
- Nature, Letters to nature, Band 331, 18.2.88,Seiten 596-599

## Beschreibung

### Technisches Gebiet

Die vorliegende Erfindung bezieht sich auf das Gebiet der neuen Hochtemperatur-Supraleiter. Sie betrifft insbesondere Verfahren zur Herstellung eines keramischen Hochtemperatur-Supraleiters in Bulk-Form, welcher im wesentlichen eine oder mehrere Phasen kontrollierter Zusammensetzung enthält, wobei eine dieser Phasen die Zusammensetzung (SE)Ba₂Cu₄₋ₓO_{8±y} aufweist, mit SE als einem 3-wertigen Seltene-Erde-Atom, x kleiner gleich 0,5, und y kleiner gleich 1.

### Stand der Technik

In jüngster Zeit hat die technologische Entwicklung der Supraleiter durch die Entdeckung der Hochtemperatur-Supraleitung in Keramiken des La-Ba-Cu-O-Systems einen unvorhergesehenen Aufschwung erfahren, der zur Entwicklung immer neuer Keramiken mit noch höheren kritischen Temperaturen geführt hat.

Diese neuen Keramiken können bisher teilweise in Bulk-Form, teilweise aber auch nur in Form dünner Schichten hergestellt werden. Wichtig für die elektrotechnische Anwendung ist jedoch gerade ein Hochtemperatur-Supraleiter in Bulk-Form.

Besondere Aufmerksamkeit ist bei den bisherigen Untersuchungen auch dem System Y-Ba-Cu-O gewidmet worden. Ein Vertreter dieses Systems, das Oxid YBa₂Cu₃O_{7-δ}, welches auch unter der Bezeichnung "1-2-3-Verbindung" bekannt ist, zeichnet sich durch eine kritische Temperatur T_{c} von etwa 90 K aus, kann vergleichsweise einfach in Bulk-Form hergestellt werden und wäre daher für die Anwendung von besonderem Interesse.

Problematisch bei der "1-2-3-Verbindung" ist jedoch die fehlende thermische Stabilität des eingebauten Sauerstoffs, die bereits bei Temperaturen von wenigen 100° C zu einer unerwünschten Veränderung in Struktur und Zusammensetzung der Keramik führt und damit die supraleitenden Eigenschaften des Materials verändert.

### Darstellung der Erfindung

Aufgabe der vorliegenden Erfindung ist es nun, ein Verfahren zur Herstellung eines keramischen Hochtemperatur-Supraleiter anzugeben, der sich durch thermische Stabilität bis zu vergleichsweise hohen Temperaturen auszeichnet.

Die Aufgabe wird bei einem Verfahren der eingangs genannten Art durch die folgenden Schritte gelöst:
(a) (SE)Ba₂Cu₃O_{7-δ} mit δ zwischen 0,02 und 0,05, und CuO werden in Pulverform vermischt und anschliessend in die gewünschte Form gepresst; und
(b) der Pressling wird unter einem Sauerstoff-Druck grösser 5*10⁶ Pa und bei einer Temperatur von etwa 1000° C gesintert.

Gemäss einem ersten bevorzugten Ausführungsbeispiel der Erfindung ist SE ein Yttrium-Atom.

Gemäss einem zweiten bevorzugten Ausführungsbeispiel der Erfindung ist x gleich 0 und y ungefähr gleich 0.

Weitere Ausführungsbeispiele der Erfindung ergeben sich aus den Unteransprüchen.

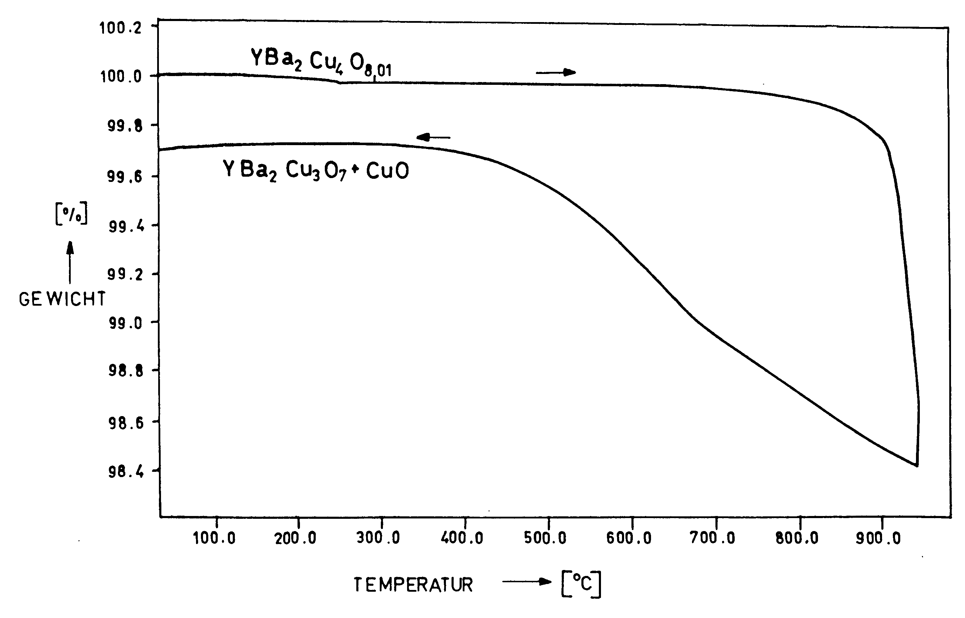

### Kurze Beschreibung der Zeichnung

Die Erfindung soll nachfolgend anhand von Ausführungsbeispielen im Zusammenhang mit der Zeichnung näher erläutert werden. Die einzige Figur zeigt das Ergebnis einer Thermogravimetrie-Messung an einer Bulk-Keramik der Zusammensetzung YBa₂Cu₄O_{8,01}.

### Wege zur Ausführung der Erfindung

Die Erfindung geht aus von der Entdeckung, dass unter bestimmten Voraussetzungen in Bulk-Keramiken der "1-2-3-Verbindung" YBa₂Cu₃O₇ Defekte auftreten können, die zunächst in der Literatur als zusätzliche Lagen von Cu-Atomen innerhalb der bekannten Struktur der "1-2-3-Verbindung" interpretiert worden sind (siehe dazu: H.W.Zandbergen et al., Nature 331, S.596-599 (1988)).

Spätere Untersuchungen an aufgedampften dünnen Schichten haben ergeben, dass im Y-Ba-Cu-O-System neben der bekannten 1-2-3-Phase eine weitere Phase existiert, deren Stöchiometrie als YBa₂Cu₄O₈ geschrieben werden kann, und deren kritische Temperatur mit 80 K unterhalb des T_{c} der 1-2-3-Phase liegt (P.Marsh et al., Nature 334, S.141-143 (1988)).

Der Anteil dieser neuen Phase in den dünnen Schichten ist mit 85 % angegeben worden, sodass die neue Phase weder in reiner Form noch in Bulk-Form vorlag. Darüberhinaus sind keine Angaben bezüglich der thermischen Stabilität der neuen Phase gemacht worden.

Es hat sich nun herausgestellt, das die neue Phase in der stöchiometrischen aber auch in einer von dieser abweichenden Zusammensetzung nicht nur als Bulk-Material hergestellt werden kann, sondern in dieser Form auch eine thermische Stabilität des Sauerstoffs zeigt, die der der bekannten "1-2-3-Verbindung" deutlich überlegen ist.

Die erhöhte thermische Stabilität wird zurückgeführt auf die Anwesenheit von Cu-O-Doppelketten in der Kristallstruktur der neuen Phase. Aus diesem Grunde ist es auch denkbar, die Yttrium-Atome in der Einheitszelle durch andere gleichwertige Seltene-Erde-Atome SE zu ersetzen.

In allgemeiner Form besteht der bei dem erfindungsgemässen Verfahren entstehende Bulk-Supraleiter im wesentlichen aus einer oder mehreren Phasen kontrollierter Zusammensetzung. Eine dieser Phasen hat die Zusammensetzung (SE)Ba₂Cu₄₋ₓO_{8±y}, wobei SE ein 3-wertiges Seltene-Erde-Atom, x kleiner gleich 0,5, und y kleiner gleich 1 ist.

Gemäss einer erprobten Ausführungsform der Erfindung ist SE ein Yttrium-Atom, hat x den Wert 0 und y den Wert von ungefähr gleich 0.

Gemäss einer anderen Ausführungsform ist x ungefähr gleich 0,5.

Das erfindungsgemässe Verfahren geht aus von zwei oxidischen Komponenten, von denen die eine die der "1-2-3-Verbindung" analoge Zusammensetzung (SE)Ba₂Cu₃O_{7-δ} aufweist, die andere aus CuO besteht. Der Parameter δ liegt dabei vorzugsweise im Bereich zwischen 0,02 und 0,05.

Beide Komponenten werden in an sich bekannter Weise pulverisiert, miteinander gemischt und in die gewünschte Form gepresst. Der Pressling wird anschliessend einem Sinterprozess unter Sauerstoff-Druck von grösser 5*10⁶ Pa und bei erhöhten Temperaturen von etwa 1000° C unterworfen.

Es entsteht dann ein thermisch stabiler Bulk-Supraleiter, der je nach dem Mischungsverhältnis der beiden Komponenten (stöchiometrisch oder nicht) eine stöchiometrische (1-2-4) oder nicht-stöchiometrische (z.B. 1-2-3,5) Zusammensetzung hat.

Welche Parameter bei der Herstellung vorkommen, soll das nachfolgende Beispiel zeigen:

### Beispiel

Zur Herstellung eines Bulk-Supraleiters wurden mehrere Gramm der Komponenten YBa₂Cu₃O_{7-δ} (δ=0,02-0,05) und CuO in üblicher Weise pulverisiert, im stöchiometrischen Verhältnis gemischt und verpresst. Der Pressling wurde anschliessend in einem Autoklaven in reiner O₂-Atmosphäre bei einem Druck von etwa 4*10⁷ Pa mit einer Rate von etwa 5°/min auf etwa 1000° C erhitzt, bei dieser Temperatur 20 h gehalten und dann mit einer Rate von etwa 2°/min wieder abgekühlt. Der dabei entstandene Bulk-Supraleiter hatte eine gemessene Zusammensetzung von YBa₂Cu₄O_{8,01} und eine kritische Temperatur von 80 K.

Zur Ueberprüfung seiner thermischen Stabilität wurde ein auf diese Weise hergestellter Bulk-Supraleiter mittels der Thermogravimetrie untersucht. Das Ergebnis dieser Untersuchung ist in der Figur in Form einer Kurve wiedergegeben, welche das Gewicht der untersuchten Probe (in %) in Abhängigkeit von der Temperatur (in °C) beim Aufwärmen (oberer Kurventeil) und beim anschliessenden Abkühlen (unterer Kurventeil) in einer O₂-Atmosphäre von 10⁵ Pa zeigt.

Der obere Kurventeil macht deutlich, dass für eine Bulk-Keramik mit der Zusammensetzung YBa₂Cu₄O_{8,01} eine nennenswerte Instabilität erst bei Temperaturen von etwa 800°C auftritt.

Der untere Kurventeil zeigt dann das thermogravimetrische Verhalten des Systems YBa₂Cu₃O₇ + CuO.

Insgesamt steht mit der Erfindung ein keramischer Hochtemperatur-Supraleiter in Bulk-Form zur Verfügung, der vergleichsweise einfach herzustellen ist und sich durch eine hohe thermische Stabilität sowie durch eine hohe kritische Temperatur auszeichnet.

## Patentansprüche

1. Verfahren zur Herstellung eines keramischen Hochtemperatur-Supraleiters in Bulk-Form, welcher im wesentlichen eine oder mehrere Phasen kontrollierter Zusammensetzung enthält, wobei eine dieser Phasen die Zusammensetzung (SE)Ba₂Cu₄₋ₓO_{8±y} aufweist, mit SE als einem 3-wertigen Seltene-Erde-Atom, x kleiner gleich 0,5, und y kleiner gleich 1, gekennzeichnet durch die folgenden Schritte:
(a) (SE)Ba₂Cu₃O_{7-δ} mit δ zwischen 0,02 und 0,05, und CuO werden in Pulverform vermischt und anschliessend in die gewünschte Form gepresst; und
(b) der Pressling wird unter einem Sauerstoff-Druck grösser 5*10⁶ Pa und bei einer Temperatur von etwa 1000° C gesintert.

2. Verfahren nach Anspruch 1, dadurch gekennzeichnet, dass SE ein Yttrium-Atom ist.

3. Verfahren nach Anspruch 2, dadurch gekennzeichnet, dass die Sinterung in einer reinen O₂-Atmosphäre durchgeführt wird.

4. Verfahren nach einem der Ansprüche 1 bis 3, dadurch gekennzeichnet, dass x gleich 0 und y ungefähr gleich 0 ist und die Mischungskomponenten dementsprechend in einem stöchiometrischen Verhältnis vermischt werden.

5. Verfahren nach einem der Ansprüche 1 bis 3, dadurch gekennzeichnet, dass x ungefähr gleich 0,5 ist.

6. Verfahren nach einem der Ansprüche 1 bis 5, dadurch gekennzeichnet, dass der Pressling mit einer Rate von etwa 5°/min erwärmt, etwa 20 h bei einem Druck von etwa 4*10⁷ Pa auf der Sinterungstemperatur gehalten und anschliessend mit einer Rate von etwa 2°/min abgekühlt wird.

## Claims

1. Process for producing a ceramic high-temperature superconductor in bulk form which essentially contains one or more phases of controlled composition, one of said phases having the composition (RE)Ba₂Cu_{4-x8±y}, with RE as a trivalent rare-earth atom, x being less than, or equal to, 0.5, and y being less than, or equal to, 1, characterized by the following steps:
(a) (RE)Ba₂Cu₃O_{7-δ}, where δ is between 0.02 and 0.05, and CuO are mixed in powdered form and then pressed into the desired shape; and
(b) the pressed part is sintered under an oxygen pressure of greater than 5*10⁶ Pa and at a temperature of about 1,000°C.

2. Process according to Claim 1, characterised in that RE is an yttrium atom.

3. Process according to Claim 1, characterised in that the sintering is carried out in a pure O₂ atmosphere.

4. Process according to one of Claims 1 to 3, characterised in that x is equal to 0 and y is approximately equal to 0 and the mixture components are accordingly mixed in a stoichiometric ratio.

5. Process according to one of Claims 1 to 3, characterised in that x is approximately equal to 0.5.

6. Process according to one of Claims 1 to 5, characterised in that the pressed part is heated at a rate of about 5°/min, kept for about 20 h at a pressure of about 4*10⁷ Pa at the sintering temperature and then cooled at a rate of about 2°/min.

## Revendications

1. Méthode de préparation d'un supraconducteur haute température en céramique sous forme en masse, qui contient essentiellement une ou plusieurs phase(s) de composition contrôlée, une de ces phases ayant la composition (TR)Ba₂Cu₄₋ₓO_{8±y}, TR étant un atome de terres rares de valence 3, x étant inférieur ou égal à 0,5, et y étant inférieur ou égal à 1, caractérisée par les étapes suivantes:
(a) (TR)Ba₂Cu₃O_{7-δ} avec δ entre 0,02 et 0,05, et CuO sont mélangés en forme de poudre et sont ensuite comprimés dans la forme désirée; et
(b) le comprimé est fritté sous une pression d'oxygène supérieure a 5*10⁶ Pa et à une température d'environ 1000°C.

2. Méthode selon la revendication 1, caractérisée en ce que TR est un atome d'yttrium.

3. Méthode selon la revendication 2, caractérisée en ce que le frittage est effectué sous une atmosphère de O₂ pur.

4. Méthode selon l'une quelconque des revendications 1 à 3, caractérisée en ce que x est égal à 0 et y est environ égal à 0 et que les composants du mélange sont mélangés en conséquence dans un rapport stoechiométrique.

5. Méthode selon l'une quelconque des revendications 1 à 3, caractérisée en ce que x est environ égal à 0,5.

6. Méthode selon l'une quelconque des revendications 1 à 5, caractérisée en ce que le comprimé est chauffé à une vitesse d'environ 5°/min, et maintenu pendant environ 20 h à une pression d'environ 4*10⁷ Pa à la température de frittage et est ensuite refroidi à une vitesse d'environ 2°/min.
